(19) Europäisches Patentamt
European Patent Office
Office européen des brevets

(11) EP 0 663 850 B1

(12) EUROPEAN PATENT SPECIFICATION

(45) Date of publication and mention
of the grant of the patent:
**07.05.1997 Bulletin 1997/19**

(21) Application number: **94922391.1**

(22) Date of filing: **06.08.1994**

(51) Int. Cl.$^6$: **B01D 53/52**, B01D 53/86
// C01B17/04 , B01D131:10,
B01D161:00, B01D173:20

(86) International application number:
**PCT/KR94/00107**

(87) International publication number:
**WO 95/04588 (16.02.1995 Gazette 1995/08)**

(54) **METHOD FOR REMOVING HYDROGEN SULPHIDE FROM MIXTURE GAS CONTAINING HYDROGEN SULPHIDE AND EXCESSIVE AMOUNTS OF STEAM AND AMMONIA**

METHODE ZUR ENTFERNUNG VON WASSERSTOFFSULFID AUS EINEM WASSERSTOFFSULFID UND ÜBERSCHÜSSIGE MENGEN DAMPF UND AMMONIAK ENTHALTENDEN GASGEMISCH

PROCEDE PERMETTANT D'ENLEVER DU SULPHURE D'HYDROGENE D'UN MELANGE GAZEUX CONTENANT DU SULFURE D'HYDROGENE ET DES QUANTITES EXCESSIVES DE VAPEUR D'EAU ET D'AMMONIAC

(84) Designated Contracting States:
**DE DK FR GB**

(30) Priority: **09.08.1993 KR 9315403**

(43) Date of publication of application:
**26.07.1995 Bulletin 1995/30**

(73) Proprietors:
• **POHANG IRON & STEEL CO., LTD.**
**Pohang City, Kyong Sang Book-Do 790-300 (KR)**
• **RESEARCH INSTITUTE OF INDUSTRIAL SCIENCE & TECHNOLOGY**
**Pohang City, Kyong Sang Book-Do 790-330 (KR)**

(72) Inventors:
• **CHUNG, Jong, Shik,**
**Research Institute Industrial**
**Pohang Ciy, Kyong Sang Book-do 790-330 (KR)**
• **LEE, Deog, Seong,**
**Research Institute Industrial**
**PohangCigty, Kyong Sang Book-do 790-330 (KR)**

• **KIM, Byung, Kee,**
**Research Institute of Industrial**
**Pohang City, Kyong Sang Book-do 790-330 (KR)**
• **YANG, O Bong,**
**Research Institute of Industrial**
**Pohang Citty, Kyong Sang Book-do 790-330 (KR)**

(74) Representative: **Matschkur, Götz, Lindner**
**Patent- und Rechtsanwälte**
**Postfach 11 91 09**
**90101 Nürnberg (DE)**

(56) References cited:
DE-A- 3 230 553          DE-A- 3 333 679
DE-A- 4 141 173

• **Hydrocarbon Processing, Vol. 68, No. 4, April 1989 (Houston, Texas, USA), J.A. LAGAS et al., "Claus Process Gets Extra Boost"; pages 40-42; totality.**
• **The Oil and Gas Journal, Vol. 86, No. 2, 11 January 1988 (Tulsa, Okla., USA), R. KETTNER et al., "New Claus Tail-Gas Process Proved in German Operation"; pages 63-66; totality.**

## Description

Field of the invention

The present invention relates to a method for removing hydrogen sulphide ($H_2S$) from a mixture gas containing hydrogen sulphide and containing steam ($H_2O$) and ammonia ($NH_3$). More specifically, the present invention relates to a method for removing hydrogen sulphide from a mixture gas, in which the mixture gas containing less than 70 vol % of steam, less than 30 vol % of ammonia, below 10 vol % of hydrogen sulphide and other inert gases such as CO and $CO_2$ is oxidized on a heterogenous catalyst by means of air or oxygen so as to convert the hydrogen sulphide ($H_2S$) into ammonium thiosulfate (($NH_4$)$_2$$S_2$$O_3$) and element sulphur (S), thereby completely removing the hydrogen sulphide from the mixture gas. Particularly, the present invention relates to a method for removing hydrogen sulphide from the mixture gas, in which, before a waste gas mixture (generally containing: 60-70 vol % of steam, 5-20 vol % of ammonia, 2-5 vol% of hydrogen sulphide, and other inert gases) of a steel manufacturing plant is incinerated in an incineration furnace, the waste mixture gas is reacted on a catalyst by means of air or oxygen so as to convert the hydrogen sulphide ($H_2S$) into ammonium thiosulfate (($NH_4$)$_2$$S_2$$O_3$) or into element sulphur (S), thereby completely removing the hydrogen sulphide from the mixture gas.

Background of the invention

The method for directly removing hydrogen sulphide through oxidation includes a Claus process, a Super Claus process and a MODOP process. In the Claus process, an acidic gas containing a high level of hydrogen sulphide (over 20 vol %) is subjected to a thermal decomposition reaction within a Claus furnace at a temperature of 1100 - 1200°C based on Formulas 1 and 2 below.

$$2H_2S + O_2 \rightarrow 2H_2O + 2S \qquad\qquad (1)$$

$$2H_2S + 3O_2 \rightarrow 2SO_2 + 2H_2O \qquad\qquad (2)$$

The sulphur gas which is produced based on Formula 1 is made to pass through a cooling device in which the sulphur gas is converted to a liquid so as to be recovered. The unreacted hydrogen sulphide and the sulphur dioxide which is produced based on Formula 2 are subjected to a catalytic reaction within a 2-stage or 3-stage catalyst reaction vessel at a temperature of 200 - 350°C based on Formula 3 below.

$$2H_2S + SO_2 \rightarrow 3S + 2H_2O \qquad\qquad (3)$$

The recovering rate for the sulphur (S) in the Claus process is about 90 - 96% in the case of the 2-stage catalyst reaction process, and 95 - 98% in the case of 3-stage catalyst reaction process.

The removal of a low concentration $H_2S$ has been resorted to a TGT (tail gas treatment) process which is for treating the residue $H_2S$, while the MODOP process and the Super Claus process have been recently developed. In the latter two processes, $H_2S$ is directly reacted with air or oxygen under the existence of a catalyst based on Formula 4 so as to convert $H_2S$ into element sulphur, thereby removing $H_2S$.

$$H_2S + 1/2\ O_2 \rightarrow S + H_2O \qquad\qquad (4)$$

The MODOP process (Oil And Gas Journal, January 11, 63 (1988)) uses a catalyst of $TiO_2$ series to directly oxidize hydrogen sulphide of about 1 vol % (contained in the Claus tail gas) by means of air so as to recover sulphur. The sulphur recovering rate in this method is about 70 - 95%. In the MODOP process, if the tail gas contains about 12 vol % of water, the sulphur recovering rate drops to below 70%. The greatest sulphur recovery rate can be achieved when the equivalent ratio of $SO_2$/$H_2S$ is 0.5, while the sulphur recovery rate is greatly reduced above or below the equivalent ratio of 0.5, this being a disadvantage.

The Super Claus process complements the disadvantage of the MODOP process (Hydrocarbon Processing, April 40 (1989)), and in this method, hydrogen sulphide is selectively oxidized even under the existence of an excessive amount (excessive amount means an amount greater than the equivalence ratio) of oxygen so as to completely convert hydrogen sulphide into sulphur, while the catalyst activity is not affected by a high level of water content.

As described above, the conventional methods for removing hydrogen sulphide recover elemental sulphur by directly oxidizing hydrogen sulphide on a non-uniform catalyst. The reaction gas including the hydrogen sulphide mostly contains hydrogen sulphide and inert gases, and has a relatively low water content level.

Meanwhile, unlike a petroleum cracking process in which a de-sulphuring organic solvent is used, a steel manufacturing plant uses ammonia for absorbing $H_2S$ in de-sulphuring process. Therefore, in this process, ammonia as the absorbing agent and hydrogen sulphide cannot be completely separated from each other, and therefore, the mixture gas contains a small amount of $H_2S$ and excessive amounts of steam and ammonia gas. A steel manufacturing plant directly treats the mixture gas in an ammonia incineration furnace, and therefore, there occurs the problem that sulfates ($SO_X$) are released into the atmospheric air. However, no method has been proposed for improving the above mentioned method

## Summary of the invention

The present invention is intended to overcome the above described disadvantages of the conventional techniques.

Therefore it is the object of the present invention to provide a method for removing hydrogen sulphide from a mixture gas, which can be applied to a mixture gas containing an excessive amount of steam(less than 70 vol %), ammonia (about 5 - 20 vol %), a relatively small amount of hydrogen sulphide (less than 10 vol %), and other inert gases.

According to the present invention, a mixture gas containing an excessive amount of steam (less than 70 vol %), ammonia (about 5 - 20 vol %), a small amount of hydrogen sulphide (less than 10 vol %) and other inert gases is subjected to a reaction within a catalytic reaction vessel so as to convert hydrogen sulphide ($H_2S$) into ammonium thiosulfate (($NH_4)_2S_2O_3$) and elemental sulphur (S), thereby completely removing hydrogen sulphide from the mixture gas.

The mechanism by which ammonium thiosulfate (ATS) is formed during the oxidation of hydrogen sulphide on a catalyst under the existence of ammonia and steam has not been elucidated yet. However, if ATS is to be formed, $NH_3$, $H_2S$, $SO_2$ and $O_2$ have to be reacted in proper equivalence ratios on the surface of a catalyst based on formula 5 below,

$$2NH_3 + S + SO_2 + H_2O \rightarrow (NH_4)_2S_2O_3 \qquad (5)$$

The amount of ATS formed depends on the reaction conditions and the state of the surface of the catalyst.

The hydrogen sulphide containing mixture gas, to which the present invention is applied, includes a small amount of hydrogen sulphide and excessive amounts of steam and ammonia. This mixture gas should desirably contain 60 - 70 vol % of steam, 5 - 20 vol % of ammonia, and less than 10 vol % of hydrogen sulphide.

In the present invention, if air or oxygen is supplied too much into the catalyst reaction vessel, not only $SO_2$ can be formed, but also ($NH_4)_2SO_4$ or ($NH_4)_2SO_3$ can be formed. On the other hand, if the air or oxygen is supplied too little, the removal ratio for hydrogen sulphide not only becomes too low, but also ($NH_4)_2S$ or $NH_2SO_3NH_4$ may be formed.

## Description of the preferred embodiment

In the present invention, when oxygen is supplied to a catalyst reaction vessel, it should be supplied preferably in the amount of 0.5 - 10 times the amount of the hydrogen sulphide. The temperature of the catalyst reaction vessel should be preferably 170 - 350°C, and the reason is that the conversion rate of $H_2S$ is lowered below 170°C, while, above 350°C, SOx may be produced and the catalyst may be damaged. The elemental sulphur and ammonium thiosulfate which have been produced in the catalytic reaction vessel are condensed using a condenser kept below 100 °C. For the condensate containing ammonium thiosulfate and the solid sulphur, a filtering is carried out to separate the solid sulphur. If a crystallized ammonium thiosulfate is to be obtained, the ammonium thiosulfate is heated to below 100°C, so that water and ammonia should be evaporated. The produced ammonium thiosulfate (($NH_4)_2S_2O_3$) is white crystals, and well dissolved in water, while its density is 1.679 $g/cm^3$. Its worldwide use is such that 50 % of it is used for photo development, and 50 % of it is used in the agricultural field. The catalyst which is used in the present invention must be a catalyst of cobalt and molybdenum supported by alumina.

As described above, in the present invention, hydrogen sulphide which is contained in a mixture gas containing an excessive amount of steam (water) and ammonia is oxidized to convert it into the element sulphur and ammonium thiosulfate, and the latter two materials are separated from each other, thereby removing over 98% of hydrogen sulphide in an easy manner. The present invention can be applied typically to pre-treating the mixture gas (composed of: about 60 - 70 vol % of steam, about 5 - 20 vol % of ammonia, about 2- 5 vol % of hydrogen sulphide and other inert gases) of a steel manufacturing plant.

The present invention will be described based on actual examples below.

〈Example 1〉

Ten g of a catalyst which was composed of 3 wt % of cobalt and 7.5 wt % of molybdenum supported by alumina was put into a U shaped reaction vessel made of quartz. An inert gas such as nitrogen was made to flow into the vessel, and at the same time, the vessel was heated up to 300°C which is the reaction temperature. Then a mixture gas composed of ammonia, hydrogen sulphide, steam and nitrogen together with oxygen was injected into the reaction vessel at the flow rate of 170ml/min (ammonia), 30 ml/min (hydrogen sulphide), 700 ml/min (steam), 85 ml/min (nitrogen) and 15 ml/min (oxygen) respectively. The produced materials were passed through a condenser which had been installed at the back of the reaction vessel and which was maintained at a temperature of 110 - 120°C, so as to condense the produced materials. The gas (the major ingredient being nitrogen) which was not condensed was heated to 160°C, and was analyzed. After carrying out the reaction for 24 hours, the condensed materials were dissolved in water, and a filtering was carried out to separate the solid sulphur. Thus a 60 % aqueous ammonium thiosulfate solution was obtained. When calculated taking the sulphur as the base, the conversion, X, for hydrogen sulphide of the mixture gas was 98%, the selectivity $S_1$ for the ammonium thiosulfate was 45%, the selectivity $S_2$ for sulphur was 55%, and the selectivity $S_3$ for the sulphur dioxide was 0%.

〈Examples 2-4 and Comparative Example 1〉

The process was carried out in the same manner as that of Example 1, except that the flow rate of oxygen was 23 ml/min, 30 ml/min, 60 ml/min, and 90 ml/min respectively. When calculated taking sulphur as the base, the conversion X for hydrogen sulphide, the selectivity $S_1$ for ammonium thiosulfate, the selectivity $S_2$ for sulphur, and the selectivity $S_3$ for sulphur dioxide were as shown in Table 1 below.

〈Table 1〉

|  | Oxy flw rate (ml/min) | X(%) | $S_1$(%) | $S_2$(%) | $S_3$ (%) |
|---|---|---|---|---|---|
| Example 2 | 23 | 97 | 43 | 51 | 0 |
| Example 3 | 30 | 98 | 57 | 43 | 0 |
| Example 4 | 60 | 99 | 72 | 23 | 5 |
| Cmp.Example 1 | 90 | 100 | 74 | 5 | 21 |

〈Examples 5-11〉

The conditions were the same as those of Example 1, and only the reaction temperatures were different. The conversion rates for the different reaction temperatures are shown in Table 2 below. As shown in Table 2, at temperatures over 170°C, the removal of hydrogen sulphide was possible by 95%, and the production ratio of sulphur to ammonium thiosulfate could be adjusted to some degree.

〈Table 2〉

|  | Reaction temp (°C) | X(%) | $S_1$(%) | $S_2$(%) | $S_3$(%) |
|---|---|---|---|---|---|
| Example 5 | 170 | 95 | 34 | 65 | 0 |
| Example 6 | 200 | 97 | 37 | 63 | 0 |
| Example 7 | 225 | 98 | 40 | 60 | 0 |
| Example 8 | 250 | 98 | 42 | 58 | 0 |
| Example 9 | 275 | 99 | 43 | 57 | 0 |
| Example 10 | 325 | 98 | 47 | 53 | 0 |
| Example 11 | 350 | 98 | 49 | 51 | 0 |

〈Example 12〉

In order to elicit the influence of hydrocarbons and CO and $CO_2$ on the removal of hydrogen sulphide besides ammonia and water in the mixture gas, a mixture gas composed of ammonia (100 ml/min), hydrogen sulphide (30 ml/min), steam (700 ml/min), CO (50 ml/min), $CO_2$ (100 ml/min), methane (100 ml/min), ethylene (100 ml/min) and nitrogen (700 ml/min) was made to react in the same manner as that of Example 1. The results were that the conversion X for hydrogen sulphide was over 97%, the selectivity $S_1$ for ammonium thiosulfate was 45%, the selectivity $S_2$ for sul-

phur was 55%, and therefore, there was no influence of the impurities.

〈Example 13〉

Under the same conditions as those of Example 1, the concentration of hydrogen sulphide in the mixture gas was varied within the range of 1 - 10% by varying the flow rate of nitrogen, but the conversion X and the selectivities were not significantly affected.

〈Comparative Example 2〉

The process was carried out in the same manner as that of Example 1, except that there was used a catalyst formed by supporting 5 wt % of cobalt and 5 wt % of molybdenum on $TiO_2$. In this case, the conversion rate was 93%, and the selectivity for sulphur was 81%, while the rest of the materials formed was a mixture of ammonium sulfite-hydrate $((NH_4)_2SO_3 \cdot H_2O)$ and ammonium sulfate $((NH_4)_2SO_4)$.

(Comparative Example 3〉

The process was carried out in the same manner as that of Example 1, except that there was used a catalyst composed of Zirconia $(ZrO_2)$, silica-alumina $(SiO_2\text{-}Al_2O_3)$, vanadia $(V_2O_5)$, or V (10 wt %) supported on $TiO_2$. In this case, the materials formed were element sulphur and $(NH_4)_xS_yO_z$ (where x=2, y=2 and z=3) mixed together. With the catalysts cited above, pure ammonium thiosulfate could not be obtained.

〈Comparative Example 4〉

The process was carried out in the same manner as that of Example 1, except that oxygen was used in the rate of 12 ml/min (8 times the equivalent ratio). The conversion was 99%, the selectivity for element sulphur was 50%, the selectivity for sulphur dioxide was 47%, and ammonium sulfite-hydrate $((NH_4)_2SO_3 \cdot H_2O)$ was formed by 3%. That is, the catalyst used was same as that of Example 1, but the over-dose of oxygen resulted in the formation of a material other than ammonium thiosulfate.

**Claims**

1. A method for removing hydrogen sulphide from a mixture gas containing excessive amounts of steam and ammonia, characterized in that: a mixture gas containing an excessive amount of steam in an amount of less than 70 vol %, ammonia in an amount of less than 30 vol %, a small amount of hydrogen sulphide in an amount of less than 10 vol % and other inert gases is subjected to a reaction within a catalytic reaction vessel on a heterogenous catalyst, formed by supporting a mixture of cobalt and molybdenum on alumina, so as to convert hydrogen sulphide $(H_2S)$ into ammonium thiosulfate $((NH_4)_2S_2O_3)$ and elemental sulphur (S), thereby completely removing hydrogen sulphide from said mixture gas.

2. The method as claimed in claim 1, wherein the amount of oxygen used is 0.5-2 times the amount of hydrogen sulphide, and the catalyst reaction temperature is 170 - 350°C.

3. The method as claimed in claim 1, wherein the amount of air used is 2.5-10 times the amount of hydrogen sulphide, and the catalyst reaction temperature is 170 - 350°C.

4. The method as claimed in claim 1, wherein element sulphur and ammonium thiosulfate formed through the catalyst reaction are condensed at a temperature of 110 - 120°C, and a filtering is carried out to obtain solid sulphur and solid or liquid ammonium thiosulfate.

**Patentansprüche**

1. Verfahren zur Entfernung von Wasserstoffsulfid aus einem Gasgemisch mit einem übermäßigen Anteil von Dampf und Ammoniak, dadurch gekennzeichnet, daß ein Gasgemisch mit einem übermäßigen Anteil von Dampf in einer Menge von 70 Vol.-%, Ammoniak in einer Menge von weniger als 30 Vol.-%, einem geringen Anteil von Wasserstoffsulfid in einer Menge von weniger als 10 Vol.-% und anderen Inertgasen innerhalb eines Katalysereaktionsbehälters einer Reaktion mit einem heterogenen Katalysator aus Kobalt und Molybdän auf Aluminiumoxid durchgeführt wird, um Wasserstoffsulfid $(H_2S)$ in Ammoniumthiosulfat $((NH_4)_2S_2O_3)$ und elementaren Schwefel (S) umzuwandeln, wodurch das Wasserstoffsulfid vollständig von dem Gasgemisch entfernt wird.

2. Verfahren nach Anspruch 1, dadurch gekennzeichnet, daß die Menge des verwendeten Sauerstoffs 0,5 - 2 mal so groß ist wie die Menge des Wasserstoffsulfids, und daß die Katalysereaktionstemperatur 170 - 350 °C beträgt..

3. Verfahren nach Anspruch 1, dadurch gekennzeichnet, daß die Menge der verwendeten Luft 2,5 - 10 mal so groß ist wie die Menge des Wasserstoffsulfids, und daß die Katalysereaktionstemperatur .170 - 350 °C beträgt.

4. Verfahren nach Anspruch 1, dadurch gekennzeichnet, daß bei der Katalysereaktion gebildeter, elementarer Schwefel und Ammoniumthiosulfat bei einer Temperatur von 110 -120 °C kondensiert werden, und eine Filterung durchgeführt wird, um festen Schwefel und festes oder flüssiges Ammoniumthiosulfat zu erhalten.

**Revendications**

1. Procédé pour enlever du sulfure d'hydrogène d'un mélange gazeux contenant des quantités excessives de vapeur d'eau et d'ammoniac, caractérisé en ce que : on soumet un mélange gazeux, contenant une quantité excessive de vapeur d'eau dans une proportion volumique inférieure à 70%, de l'ammoniac dans une proportion volumique inférieure à 30%, une petite quantité de sulfure d'hydrogène dans une proportion volumique inférieure à 10% et d'autres gaz inertes, à une réaction dans un conteneur de réaction catalytique sur un catalyseur hétérogène, formé d'un mélange de cobalt et de molybdène supporté par de l'alumine, de manière à convertir le sulfure d'hydrogène ($H_2S$) en thiosulfate d'ammonium (($NH_4)_2S_2O_3$)et en soufre élémentaire (S), en enlevant ainsi complètement le sulfure d'hydrogène dudit mélange gazeux.

2. Procédé selon la revendication 1, dans lequel la quantité d'oxygène utilisée est de 0,5-2 fois la quantité de sulfure d'hydrogène et la température de la réaction catalytique est de 170-350°C.

3. Procédé selon la revendication 1, dans lequel la quantité d'air utilisée est de 2,5-10 fois la quantité de sulfure d'hydrogène et la température de la réaction catalytique est de 170-350°C.

4. Procédé selon la revendication 1, dans lequel le soufre élémentaire et le thiosulfate d'ammonium formés au cours de la réaction catalytique sont condensés à une température de 110-120°C et l'on effectue un filtrage pour obtenir du soufre solide et du thiosulfate d'ammonium solide ou liquide.